# FASCICULE DE BREVET EUROPEEN

(11) **EP 3 121 073 B1**
(45) Date de publication et mention de la délivrance du brevet: **23.05.2018**
(21) Numéro de dépôt: 16180763.1
(22) Date de dépôt: 22.07.2016
(51) Int. Cl.: B60S 1/34, B60S 1/16, B29C 45/14, F16D 1/06, F16H 55/06

(54) **ORGANE DE SORTIE, DISPOSITIF DE MOTORISATION POUR L ENTRAINEMENT D AU MOINS UN BRAS D ESSUIE-GLACE DE VEHICULE AUTOMOBILE ET PROCEDE DE FABRICATION D'UN ORGANE DE SORTIE**
AUSTRITTSORGAN, VORRICHTUNG ZUR MOTORISIERUNG FÜR DEN ANTRIEB MINDESTENS EINES SCHEIBENWISCHERARMS EINES KRAFTFAHRZEUGS, UND HERSTELLUNGSVERFAHREN EINES SOLCHEN AUSTRITTSORGANS
OUTPUT ELEMENT, MOTORISATION DEVICE FOR DRIVING AT LEAST ONE WINDSCREEN WIPER ARM OF A MOTOR VEHICLE, AND METHOD FOR PRODUCTION OF AN OUTPUT ELEMENT

(30) Priorité: 24.07.2015 FR 1557119
(43) Date de publication de la demande: 25.01.2017
(73) Titulaire: Valeo Systèmes d'Essuyage, 78322 Le Mesnil Saint Denis (FR)
(72) Inventeur: LASSALLE, Christophe, 86450 Leigne les Bois (FR)
(74) Mandataire: Callu Danseux, Violaine

(56) Documents cités:
- EP-A2- 0 187 965
- DE-A1-102008 041 864
- FR-A1- 2 698 945
- US-A- 4 550 469

## Description

La présente invention concerne un organe de sortie pour dispositif de motorisation et un dispositif de motorisation pour l'entraînement d'au moins un bras d'essuie-glace de véhicule automobile. L'invention concerne également un procédé de fabrication d'un organe de sortie pour dispositif de motorisation.

Certains dispositifs de motorisation pour l"entraînement de bras d'essuie-glace comportent un arbre menant entraîné par un moteur présentant une vis sans fin engrenant avec une roue dentée solidaire d'un arbre mené.

La roue dentée est montée sur une première extrémité de l'arbre mené en acier. Sur la deuxième extrémité de l'arbre mené est généralement assemblée soit une manivelle, par exemple emmanchée puis bouterollée, soit un entraineur de bras balai. US-A-4550469 montre le préambule de la revendication 1. Un des buts de la présente invention est de proposer une alternative aux dispositifs de motorisation connus pour l'entraînement d'au moins un bras d'essuie-glace de véhicule automobile.

A cet effet, l'invention a pour objet un organe de sortie pour dispositif de motorisation d'entraînement d'au moins un bras d'essuie-glace de véhicule automobile, comportant un arbre de sortie et une roue dentée solidaire et coaxiale à l'arbre de sortie, caractérisé en ce que l'arbre de sortie est en matériau plastique et en ce que l'organe de sortie comporte un insert métallique, le matériau plastique de l'arbre de sortie surmoulant partiellement l'insert métallique en laissant apparaitre une tête d'insert dégagée en bout d'arbre de sortie, destinée à s'assembler avec un élément d'essuie-glace à entrainer en rotation.

L'arbre de sortie en matériau plastique permet d'alléger significativement le poids du dispositif de motorisation, cet allègement pouvant être de l'ordre de 50% du poids total, sans augmenter le coût d'obtention de ce dispositif.

En outre, l'insert métallique débouchant en bout d'arbre de sortie permet de conserver une coopération métal-métal au niveau de l'entrainement en sortie du dispositif de motorisation. Cette coopération métallique peut s'avérer indispensable notamment pour un montage en force d'une manivelle présentant un orifice de petite dimension, tel que de l'ordre de 10mm.

Par ailleurs, l'organe de sortie peut facilement s'adapter pour coopérer avec différents formes complémentaires de l'élément de bras d'essuie-glace à entrainer en rotation. Pour cela, il suffit au cours du procédé de fabrication, de modifier la forme de la tête d'insert avant de surmouler l'insert métallique avec le matériau plastique de l'arbre de sortie. On peut ainsi assembler un élément d'essuie-glace tel qu'une manivelle ou un bras d'essuie-glace en utilisant le même procédé de montage que celui déjà existant.

Selon une ou plusieurs caractéristiques de l'organe de sortie, prise seule ou en combinaison,
- une portion interne de l'insert métallique, surmoulée par le matériau plastique de l'arbre de sortie, présente des reliefs et creux radiaux périphériques,
- les reliefs et creux radiaux périphériques de la portion interne sont formés par des cannelures axiales,
- les reliefs et creux radiaux périphériques de la portion interne sont formés par au moins deux lobes radiaux,
- l'insert métallique est réalisé en deux parties distinctes s'assemblant entre elles axialement, une première partie portant la tête d'insert et une deuxième partie portant la portion interne,
- le matériau plastique de l'arbre de sortie comporte une matrice de plastique et des fibres de renfort,
- la roue dentée est en matériau plastique et le matériau plastique de la roue dentée est différent du matériau plastique de l'arbre de sortie ; cela permet d'optimiser la résistance mécanique de l'organe de sortie tout en limitant son coût et le poids du dispositif de motorisation,
- la roue dentée est en matériau plastique et le matériau plastique de la roue dentée surmoule l'arbre de sortie,
- l'arbre de sortie présente une embase radiale surmoulée par le matériau plastique de la roue dentée,
- l'embase radiale comporte au moins un trou axial et/ou des reliefs et creux radiaux périphériques. Ainsi, au cours du surmoulage, le matériau plastique de la roue dentée vient s'intercaler dans les trous de l'embase radiale renforçant le maintien mutuel de la roue dentée avec l'arbre de sortie. Cela permet d'assurer la transmission de couple du moteur électrique à l'élément à entrainer en rotation, y compris pour un couple de forte amplitude.
- l'arbre de sortie est creux et débouchant à l'extrémité opposée de l'extrémité recevant partiellement l'insert métallique. L'arbre de sortie creux et débouchant permet le passage d'un outil de contre-appui utilisé contre l'extrémité de l'insert métallique au cours du montage du dispositif de motorisation.
- la tête d'insert présente une forme cylindrique moletée droit,
- la tête d'insert présente une portion tronconique cannelée surmontée d'une portion cylindrique filetée.

L'invention a aussi pour objet un dispositif de motorisation pour l'entraînement d'au moins un bras d'essuie-glace de véhicule automobile, caractérisé en ce qu'il comprend un organe de sortie tel que décrit précédemment.

L'invention a encore pour objet un procédé de fabrication d'un organe de sortie tel que décrit précédemment, caractérisé en ce qu'il comporte une étape au cours de laquelle on surmoule un matériau plastique sur une portion interne d'un insert métallique pour former un arbre de sortie.

Le procédé de fabrication peut comporter une étape au cours de laquelle on surmoule un matériau plastique sur l'arbre de sortie pour former une roue dentée.

Selon une caractéristique de l'invention, on peut coinjecter les matériaux plastiques de l'arbre de sortie et de la roue dentée.

### DESCRIPTION SOMMAIRE DES DESSINS

D'autres avantages et caractéristiques apparaîtront à la lecture de la description d'un exemple non limitatif de réalisation de l'invention, ainsi que sur les figures annexées sur lesquelles :
- la figure 1 représente une vue schématique d'éléments d'un dispositif de motorisation,
- la figure 2 montre une vue en perspective d'un premier mode de réalisation d'un organe de sortie du dispositif de motorisation de la figure 1, ledit organe de sortie comportant notamment un insert et un arbre de sortie assemblés,
- la figure 3 montre une vue en perspective d'une première variante d'arbre de sortie, dont le corps est représenté en transparence, de l'organe de sortie de la figure 2,
- la figure 4 montre une vue en perspective d'une première variante d'insert métallique, configuré pour coopérer avec la première variante d'arbre de sortie de la figure 3 pour former l'organe de sortie de la figure 2,
- la figure 5 montre une vue en perspective d'une deuxième variante d'arbre de sortie, dont le corps est représenté en transparence, de l'organe de sortie de la figure 2,
- la figure 6 montre une vue en perspective d'une deuxième variante d'insert métallique, configuré pour coopérer avec la deuxième variante d'arbre de sortie de la figure 5 pour former l'organe de sortie de la figure 2,
- la figure 7a montre une première partie de l'insert métallique de la figure 6,
- la figure 7b montre une deuxième partie de l'insert métallique de la figure 6,
- la figure 8 montre une vue en perspective d'un deuxième mode de réalisation d'un organe de sortie,
- la figure 9 montre une vue en perspective d'un insert métallique selon une troisième variante, configuré pour équiper l'organe de sortie selon le deuxième mode de réalisation, et
- la figure 10 montre une vue en perspective d'un insert métallique selon une quatrième variante, configuré pour équiper l'organe de sortie selon le deuxième mode de réalisation.

Sur ces figures, les éléments identiques ou analogues portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

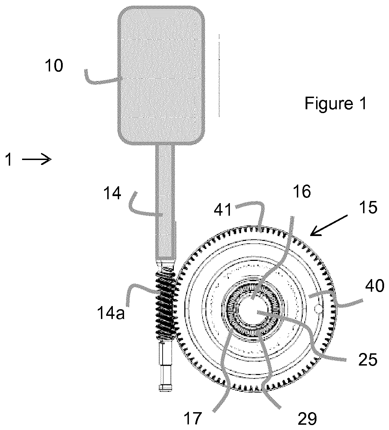

En référence à la figure 1, on a représenté un dispositif de motorisation 1 pour l'entraînement d'au moins un bras d'essuie-glace de véhicule automobile, tel que l'entrainement des bras d'essuie-glace conducteur et passager du parebrise.

Le dispositif de motorisation 1 comprend un moteur 10 électrique d'entraînement logé dans un carter (non représenté). Le moteur 10 comprend classiquement un stator et un rotor dont l'arbre menant 14, qui fait saillie à partir du rotor, porte une vis sans fin 14a.

Le dispositif de motorisation 1 comprend également un organe de sortie 15 comprenant un arbre de sortie 17 solidaire en rotation d'une roue dentée 40 dont la denture de sortie 41 engrène avec la vis sans fin 14a.

Selon une autre forme de réalisation (non représentée), le dispositif de motorisation 1 comprend des organes de transfert rotatifs d'une transmission à engrenages entre cet arbre menant 14 et l'organe de sortie 15, par exemple générant une réduction mécanique.

L'arbre de sortie 17 est réalisé en matériau plastique.

L'organe de sortie 15 comprend également un insert métallique 16 disposé à une extrémité axiale de l'arbre de sortie, à l'opposé de la roue dentée.

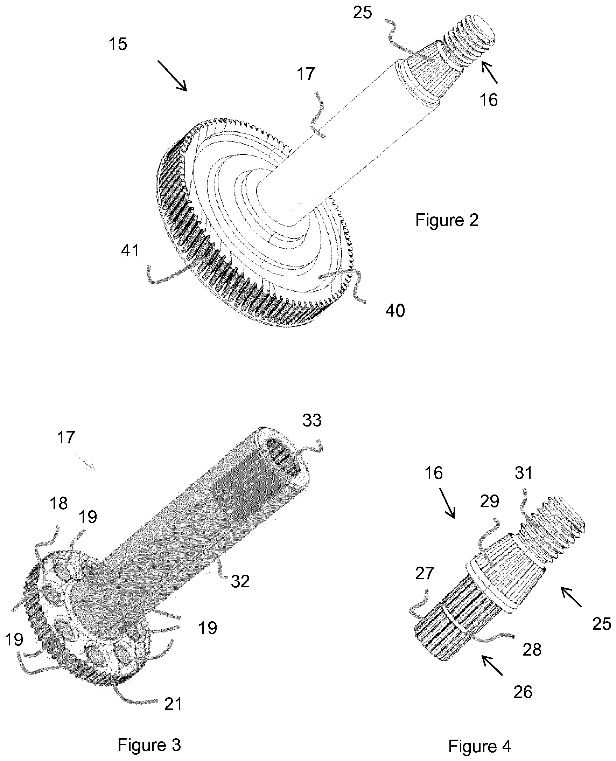

Mieux visible sur la figure 2, le matériau plastique de l'arbre de sortie 17 surmoule partiellement l'insert métallique 16 en laissant apparaître une tête d'insert 25. La tête d'insert 25, dégagée de l'arbre de sortie 17, est destinée à être assemblée avec un élément d'essuie-glace à entrainer en rotation, tel qu'une manivelle (ou levier) d'un dispositif de transmission d'un mécanisme d'essuie-glace ou tel qu'une tête de bras d'essuie-glace (non représentés).

L'arbre de sortie 17 en matériau plastique permet d'alléger significativement le poids du dispositif de motorisation 1 sans en augmenter le coût. En outre, l'insert métallique 16 débouchant en bout d'arbre de sortie 17 permet de conserver une coopération métal-métal au niveau de l'entrainement en sortie du dispositif de motorisation 1. Cette coopération métallique peut s'avérer indispensable notamment pour un montage en force d'une manivelle présentant un orifice de petite dimension, tel que de l'ordre de 10mm. Par ailleurs, l'organe de sortie 15 peut facilement s'adapter pour coopérer avec différents formes complémentaires de l'élément de bras d'essuie-glace à entrainer en rotation. Pour cela, il suffit au cours du procédé de fabrication, de modifier la forme de la tête d'insert 25 avant de surmouler l'insert métallique 16 par le matériau plastique de l'arbre de sortie 17. On peut ainsi assembler un élément d'essuie-glace tel qu'une manivelle ou un bras d'essuie-glace en utilisant le même procédé de montage que celui déjà existant.

Le matériau plastique de l'arbre de sortie 17 peut comporter un ou plusieurs plastiques différents. Le matériau plastique peut comporter une matrice de plastique renforcée de fibres de renfort, telles que des fibres non métalliques, comme des fibres de carbone, de verre ou d'aramide. On augmente ainsi la rigidité et la résistance de l'arbre de sortie 17.

Dans une recherche d'allégement du dispositif, la roue dentée 40 peut également être réalisée en matériau plastique.

Dès lors, l'arbre denté formé par la roue dentée 40 et l'arbre de sortie 17 peut être réalisé en une seule pièce, formé d'un même matériau plastique ou bien, comme cela a pu être décrit précédemment, de plusieurs plastiques différents ou d'une matrice de plastique renforcée de fibres.

Alternativement, on prévoit que le matériau plastique de la roue dentée 40 surmoule l'arbre de sortie 17.

Pour cela, au cours du procédé de fabrication de l'organe de sortie 15, on forme l'arbre dentée par surmoulage d'un matériau plastique sur l'arbre de sortie 17 pour former une roue dentée 40. Ce surmoulage peut être réalisé soit par utilisation de l'arbre de sortie comme insert, soit, si les différentes températures d'injection des matériaux plastiques le permettent, par coinjection des matériaux plastiques de l'arbre de sortie 17 et de la roue dentée 40.

Le matériau de la roue dentée 40 peut comporter un ou plusieurs plastiques différents, pouvant alors être de natures différentes du matériau ou des matériaux plastique de l'arbre de sortie 17.

On prévoit par exemple une roue dentée 40 en polyoxyméthylène de sigle POM. Ce matériau plastique présente de bonnes qualités de flexibilité et un bon coefficient de friction.

Le surmoulage du matériau plastique de la roue dentée 40 sur l'arbre de sortie 17 permet d'obtenir des caractéristiques différentes pour la roue dentée 40 et pour l'arbre de sortie 17, ce qui permet d'optimiser la résistance mécanique de l'organe de sortie 15 tout en limitant son coût et le poids du dispositif de motorisation 1.

On prévoit ainsi par exemple que l'arbre denté soit plus rigide au niveau de l'arbre de sortie 17 qu'au niveau de la roue dentée 40. La roue dentée 40 peut présenter une certaine flexibilité pour engrener avec la vis sans fin 14a métallique du dispositif de motorisation 1. En revanche, l'arbre de sortie 17 peut présenter une résistance plus importante pour endurer les contraintes météorologiques, notamment vis-à-vis de la salinité ou de l'humidité de l'atmosphère.

Par ailleurs, l'arbre de sortie 17 peut présenter une embase radiale 18 surmoulée par le matériau plastique de la roue dentée 40.

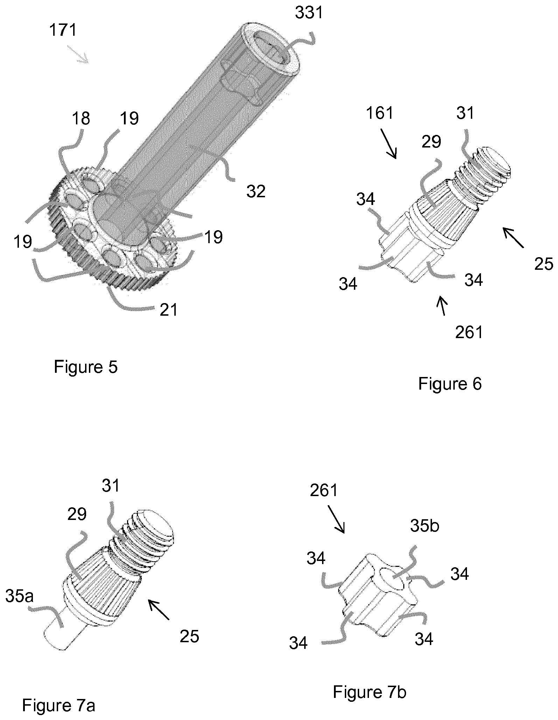

L'embase radiale 18 présente une forme générale de disque (figures 3 et 5) entièrement surmoulée par le matériau plastique de la roue dentée 40 (figure 2).

Le diamètre de l'embase radiale 18 est par exemple compris entre 1/3 et 2/3 du diamètre de la roue dentée 40, tel que de l'ordre de la moitié du diamètre de la roue dentée 40. L'épaisseur de l'embase radiale 18 est par exemple comprise entre 1/3 et 2/3 de l'épaisseur de la roue dentée 40, telle que de l'ordre de la moitié de l'épaisseur de la roue dentée 40.

L'embase radiale 18 peut en outre comporter un ou plusieurs trous 19 axiaux, tel que huit trous 19, pouvant être régulièrement répartis dans l'embase radiale 18 autour de l'axe de l'arbre de sortie 17. Ainsi, au cours du surmoulage, le matériau plastique de la roue dentée 40 vient s'intercaler dans les trous 19 de l'embase radiale 18 renforçant le maintien mutuel de la roue dentée 40 avec l'arbre de sortie 17. Cela permet d'assurer la transmission de couple du moteur 10 électrique à l'élément à entrainer en rotation, y compris pour des couples de fortes amplitudes.

L'embase radiale 18 peut également comporter des reliefs et creux radiaux périphériques, tel qu'une surface cannelée 21, formée de stries successives, périphériques et parallèles. Les formes périphériques permettent également de mieux piéger le matériau plastique de la roue dentée 40 à l'arbre de sortie 17 au cours du surmoulage.

L'insert métallique 16 comporte la tête d'insert 25 et une portion interne 26 qui sont disposées dans le prolongement l'une de l'autre, alignées sur le même axe. La tête d'insert 25 et la portion interne 26 présentent une même longueur dans cet exemple.

L'insert métallique 16 peut être réalisé en une seule pièce ou en deux parties assemblées.

Comme décrit précédemment, la tête d'insert 25 est configurée pour coopérer avec des moyens d'entraînement associés aux balais d'essuie-glace. Et la portion interne 26 est logée à l'intérieur de l'arbre de sortie pour assurer la solidarisation de l'insert 16 avec l'arbre denté.

La portion interne 26 de l'insert métallique 16, surmoulée par le matériau plastique de l'arbre de sortie 17, présente des reliefs et creux radiaux périphériques. Les formes périphériques radiales de la portion interne 26 permettent ainsi de mieux piéger le matériau plastique de l'arbre de sortie 17 lorsqu'il est surmoulé à l'insert métallique 16. Il assure la cohésion de l'ensemble permettant la transmission de couple du moteur 10 électrique à l'élément à entrainer en rotation.

Une première variante de réalisation de l'insert métallique est illustrée sur les figures 3 et 4.

Les reliefs et creux radiaux périphériques de la portion interne 26 sont formés par des cannelures axiales 27, périphériques et sensiblement parallèles entre elles. La portion interne 26 présente alors une forme générale cylindrique à moletage droit.

La portion interne 26 peut également présenter au moins une rainure annulaire 28, par exemple agencée au milieu des cannelures axiales 27.

La tête d'insert 25 présente une portion tronconique 29 cannelée surmontée d'une portion cylindrique filetée 31. La portion tronconique 29 est destinée à coopérer avec une cavité complémentaire d'une tête de bras d'essuie-glace ou d'une manivelle. Un écrou est ensuite serré sur la portion cylindrique filetée 31.

L'arbre de sortie 17 présente une forme creuse débouchant au moins à l'extrémité axiale 33 recevant partiellement l'insert métallique 16, de manière à former un logement de la portion interne 26. Ce logement présente des formes et reliefs correspondants aux formes et reliefs périphériques de la portion interne. Lors du surmoulage de l'arbre de sortie sur l'insert, ce logement se créé autour de la portion interne 26. De la matière vient notamment se loger dans la rainure annulaire 28, pour renforcer la prise de l'arbre de sortie autour de l'insert.

Les figures 5, 6, 7a et 7b illustrent une deuxième variante de réalisation de l'insert et de l'arbre de sortie.

La portion interne 261 présente des reliefs et creux radiaux périphériques formés par au moins deux bossages radiaux 34, par exemple quatre régulièrement espacés sur le pourtour de la portion interne 261, s'étendant axialement.

D'autres formes périphériques radiales non représentées permettant de piéger le matériau plastique surmoulé peuvent bien sûr être réalisées pour la portion interne. Par exemple, la portion interne présente une section en forme d'étoile à six branches de type TORX®.

En outre, dans cet exemple, l'insert métallique 161 est réalisé en parties distinctes s'assemblant entre elles axialement. Une première partie (figure 7a) porte la tête d'insert 25 et une deuxième partie (figure 7b) porte la portion interne 261.

La première et la deuxième partie peuvent présenter des moyens d'assemblage complémentaires 35a, 35b, tels qu'un pion 35a et un trou complémentaire 35 s'étendant axialement, permettant leur positionnement mutuel. On pourra prévoir que le pion soit fileté et que le trou complémentaire soit taraudé par exemple.

Du point de vue fabrication, un insert métallique 161 en deux parties permet d'avoir une portion interne 261 commune à différents types d'insert métallique. Il suffit alors simplement de changer la tête d'insert 25 pour adapter le dispositif de motorisation 1. On peut ainsi standardiser la fabrication de l'arbre denté et de la portion interne de l'insert, ce qui diminue les coûts de fabrication.

On peut noter que dans cette deuxième variante de réalisation, l'insert métallique 161 présente une portion interne 261 par exemple plus courte que la tête d'insert 25.

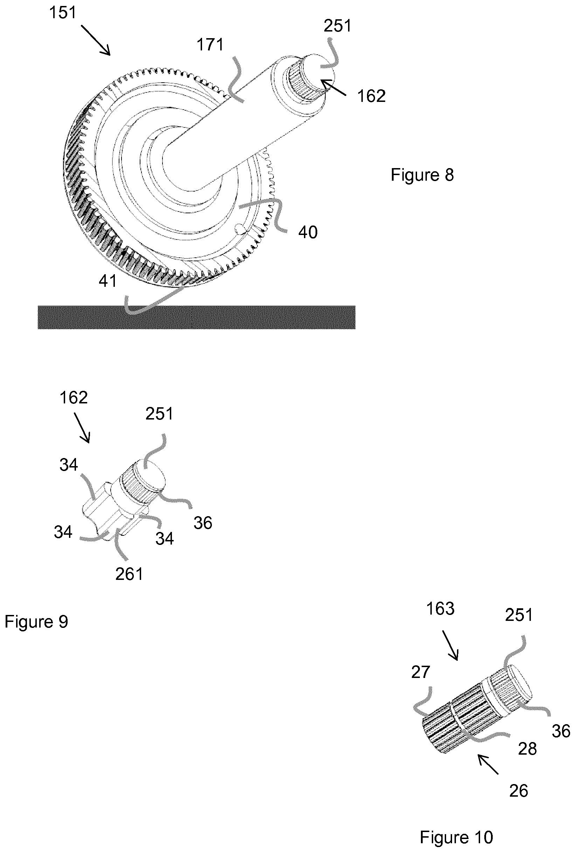

Un deuxième mode de réalisation de l'organe de sortie, illustré sur les figures 8 à 10, diffère du mode de réalisation précédemment décrit en ce que la tête d'insert 251 est différente.

La tête d'insert 251 présente une forme générale cylindrique à moletage droit, présentant des rainures et nervures 36 axiales, périphériques et sensiblement parallèles entre elles. La forme cylindrique à moletage droit est destinée à s'insérer dans un trou complémentaire d'une tête de bras ou d'une manivelle d'un dispositif de transmission d'un mécanisme d'essuie-glace. La manivelle ou le bras peut ainsi être emmanché(s) puis bouterollé(e) sur la tête d'insert 251.

Là encore, on peut prévoir au moins deux variantes de réalisation de l'insert. Une troisième variante illustrée sur la figure 9 présente une portion interne 261 semblable à la portion interne de la deuxième variante de l'insert décrite ci-dessus, et la tête d'insert 251 de forme générale cylindrique à moletage droit. Et dans une quatrième variante, illustrée sur la figure 10, l'insert métallique 163 présente une même tête d'insert 251 de forme générale cylindrique à moletage droit et une portion interne 26 ayant une forme générale cylindrique à moletage droit avec au moins une rainure annulaire 28 comme décrit dans la première variante de réalisation.

Tel que décrit précédemment, l'arbre de sortie 17 est creux au moins sur la partie de réception de la portion interne de l'insert métallique. Il peut être prévu, tel qu'illustré, que l'arbre de sortie soit creux sur toute la longueur de l'arbre de sortie, de manière à présenter un logement 32 qui débouche de l'embase radiale 18 par un orifice de sortie. Un tel arbre de sortie 17 creux sur toute sa longueur permet le passage d'un outil de contre-appui utilisé contre l'extrémité de l'insert métallique 16 au cours du montage du dispositif de motorisation 1.

Dans ce qui précède, il a été décrit que l'arbre de sortie est surmoulé sur la portion interne de l'insert et que la roue dentée est surmoulée sur l'arbre de sortie. On comprendra que l'on pourra, dans le procédé d'obtention de l'organe de sortie selon l'invention, réaliser aussi bien l'étape de surmoulage de l'arbre de sortie par le matériau de la roue dentée après ou avant l'étape de surmoulage de l'insert par le matériau de l'arbre de sortie, de sorte que l'on pourrait, sans sortir du contexte de l'invention, surmouler la roue dentée sur un ensemble formé de l'arbre de sortie et de l'insert, ou surmouler l'arbre denté dans son ensemble, c'est-à-dire la roue dentée et l'arbre de sortie, sur la portion interne de l'insert.

## Revendications

1. Organe de sortie (15 ; 151) pour dispositif de motorisation (1) d'entraînement d'au moins un bras d'essuie-glace de véhicule automobile, comportant un arbre de sortie (17 ; 171) et une roue dentée (40) solidaire et coaxiale à l'arbre de sortie (17 ; 171), l'arbre de sortie (17 ; 171 étant en matériau plastique et l'organe de sortie (15 ; 151) comportant un insert métallique (16; 161 ; 162 ; 1 **caractérisé en ce que** le matériau plastique de l'arbre de sortie (17 ; 171) surmoule partiellement l'insert métallique (16 ; 161 ; 162 ; 163) en laissant apparaitre une tête d'insert (25 ; 251) dégagée en bout d'arbre de sortie (17 ; 171), destinée à s'assembler avec un élément d'essuie-glace à entrainer en rotation.

2. Organe de sortie (15 ; 151) selon la revendication précédente, **caractérisé en ce que** l'insert métallique (16 ; 161 ; 162 ; 163) comporte ladite tête d'insert (25 ; 251) et une portion interne (26 ; 261) surmoulée par le matériau plastique de l'arbre de sortie (17 ; 171).

3. Organe de sortie (15 ; 151) selon la revendication précédente, **caractérisé en ce que** ladite portion interne (26 ; 261) présente des reliefs et creux radiaux périphériques.

4. Organe de sortie (15 ; 151) selon la revendication précédente, **caractérisé en ce que** les reliefs et creux radiaux périphériques de la portion interne (26) sont formés par des cannelures axiales (27).

5. Organe de sortie (15 ; 151) selon la revendication 3, **caractérisé en ce que** les reliefs et creux radiaux périphériques de la portion interne (261) sont formés par au moins deux bossages radiaux (34).

6. Organe de sortie (15 ; 151) selon l'une des revendications 2 à 5, **caractérisé en ce que** l'insert métallique (16 ; 161 ; 162 ; 163) est réalisé en deux parties distinctes s'assemblant entre elles axialement, une première partie portant la tête d'insert (25 ; 251) et une deuxième partie portant la portion interne (26 ; 261).

7. Organe de sortie (15 ; 151) selon l'une des revendications précédentes, **caractérisé en ce que** le matériau plastique de l'arbre de sortie (17 ; 171) comporte une matrice de plastique et des fibres de renfort.

8. Organe de sortie (15 ; 151) selon l'une des revendications précédentes, **caractérisé en ce que** la roue dentée (40) est en matériau plastique et **en ce que** le matériau plastique de la roue dentée (40) est différent du matériau plastique de l'arbre de sortie (17 ; 171).

9. Organe de sortie (15 ; 151) selon l'une des revendications précédentes, **caractérisé en ce que** la roue dentée (40) est en matériau plastique et **en ce que** le matériau plastique de la roue dentée (40) surmoule l'arbre de sortie (17 ; 171).

10. Organe de sortie (15 ; 151) selon la revendication précédente, **caractérisé en ce que** l'arbre de sortie (17 ; 171) présente une embase radiale (18) surmoulée par le matériau plastique de la roue dentée (40).

11. Organe de sortie (15 ; 151) selon la revendication précédente, **caractérisé en ce que** l'embase radiale (18) comporte au moins un trou (19) axial et/ou des reliefs et creux radiaux périphériques.

12. Organe de sortie (15 ; 151) selon l'une des revendications précédentes, **caractérisé en ce que** l'arbre de sortie (17 ; 171) est creux et débouchant à l'extrémité opposée de l'extrémité (33 ; 331) recevant partiellement l'insert métallique (16 ; 161 ; 162 ; 163).

13. Organe de sortie (151) selon l'une des revendications précédentes, **caractérisé en ce que** la tête d'insert (251) présente une forme cylindrique moletée droit.

14. Organe de sortie (15) selon l'une des revendications 1 à 12, **caractérisé en ce que** la tête d'insert (25) présente une portion tronconique (29) cannelée surmontée d'une portion cylindrique filetée (31).

15. Dispositif de motorisation (1) pour l'entraînement d'au moins un bras d'essuie-glace de véhicule automobile, **caractérisé en ce qu'**il comprend un organe de sortie (15 ; 151) selon l'une des revendications précédentes.

16. Procédé de fabrication d'un organe de sortie (15 ; 151) selon l'une des revendications 1 à 14, **caractérisé en ce qu'**il comporte une étape au cours de laquelle on surmoule un matériau plastique sur une portion interne (26 ; 261) d'un insert métallique (16 ; 161 ; 162 ; 163) pour former au moins un arbre de sortie (17 ; 171).

17. Procédé de fabrication selon la revendication précédente, **caractérisé en ce qu'**il comporte une étape au cours de laquelle on surmoule un matériau plastique sur l'arbre de sortie (17 ; 171) pour former une roue dentée (40).

18. Procédé de fabrication d'un organe de sortie (15 ; 151) selon la revendication 17, **caractérisé en ce qu'**on coinjecte les matériaux plastiques de l'arbre de sortie (17 ; 171) et de la roue dentée (40).

## Patentansprüche

1. Austrittsorgan (15; 151) für eine Motorisierungsvorrichtung (1) für den Antrieb mindestens eines Scheibenwischerarms eines Kraftfahrzeugs, umfassend eine Abtriebswelle (17; 171) und ein Zahnrad (40) das mit der Abtriebswelle (17; 171) fest verbunden und koaxial dazu ist, wobei die Abtriebswelle (17; 171) aus Kunststoff besteht und das Austrittsorgan (15; 151) einen Metalleinsatz (16; 161; 162; 163) aufweist, **dadurch gekennzeichnet, dass** der Kunststoff der Abtriebswelle (17; 171) den Metalleinsatz (16; 161; 162; 163) teilweise überformt, wobei er einen Einsatzkopf (25; 251) erkennen lässt, der am Ende der Abtriebswelle (17; 171) frei ist, der dazu bestimmt ist, mit einem Scheibenwischerelement zusammengefügt zu werden, das in Drehung zu versetzen ist.

2. Austrittsorgan (15; 151) nach dem vorhergehenden Anspruch, **dadurch gekennzeichnet, dass** der Metalleinsatz (16; 161; 162; 163) den Einsatzkopf (25; 251) und einen inneren Abschnitt (26; 261) aufweist, der von dem Kunststoff der Abtriebswelle (17; 171) überformt ist.

3. Austrittsorgan (15; 151) nach dem vorhergehenden Anspruch, **dadurch gekennzeichnet, dass** der innere Abschnitt (26; 261) periphere radiale Reliefs und Vertiefungen aufweist.

4. Austrittsorgan (15; 151) nach dem vorhergehenden Anspruch, **dadurch gekennzeichnet, dass** die peripheren radialen Reliefs und Vertiefungen des inneren Abschnitts (26) durch axiale Rillen (27) gebildet sind.

5. Austrittsorgan (15; 151) nach Anspruch 3, **dadurch gekennzeichnet, dass** die peripheren radialen Reliefs und Vertiefungen des inneren Abschnitts (261) durch mindestens zwei radiale Nocken (34) gebildet sind.

6. Austrittsorgan (15; 151) nach einem der Ansprüche 2 bis 5, **dadurch gekennzeichnet, dass** der Metalleinsatz (16; 161; 162; 163) aus zwei getrennten Teilen gebildet ist, die axial miteinander zusammengefügt werden, wobei ein erster Teil den Einsatzkopf (25; 251) trägt und ein zweiter Teil den inneren Abschnitt (26; 261) trägt.

7. Austrittsorgan (15; 151) nach einem der vorhergehenden Ansprüche, **dadurch gekennzeichnet, dass** der Kunststoff der Abtriebswelle (17; 171) eine Kunststoffmatrix und Verstärkungsfasern aufweist.

8. Austrittsorgan (15; 151) nach einem der vorhergehenden Ansprüche, **dadurch gekennzeichnet, dass** das Zahnrad (40) aus Kunststoff besteht und dass der Kunststoff des Zahnrads (40) von dem Kunststoff der Abtriebswelle (17; 171) verschieden ist.

9. Austrittsorgan (15; 151) nach einem der vorhergehenden Ansprüche, **dadurch gekennzeichnet, dass** das Zahnrad (40) aus Kunststoff besteht und dass der Kunststoff des Zahnrads (40) die Abtriebswelle (17; 171) überformt.

10. Austrittsorgan (15; 151) nach dem vorhergehenden Anspruch, **dadurch gekennzeichnet, dass** die Abtriebswelle (17; 171) eine radiale Grundplatte (18) aufweist, die von dem Kunststoff des Zahnrads (40) überformt ist.

11. Austrittsorgan (15; 151) nach dem vorhergehenden Anspruch, **dadurch gekennzeichnet, dass** die radiale Grundplatte (18) mindestens ein axiales Loch (19) und/oder periphere radiale Reliefs und Vertiefungen aufweist.

12. Austrittsorgan (15; 151) nach einem der vorhergehenden Ansprüche, **dadurch gekennzeichnet, dass** die Abtriebswelle (17; 171) hohl ist und am gegenüberliegenden Ende des Endes (33; 331) mündet, das teilweise den Metalleinsatz (16; 161; 162; 163) aufnimmt.

13. Austrittsorgan (151) nach einem der vorhergehenden Ansprüche, **dadurch gekennzeichnet, dass** der Einsatzkopf (251) eine gerade, gerändelte, zylindrische Form aufweist.

14. Austrittsorgan (15) nach einem der Ansprüche 1 bis 12, **dadurch gekennzeichnet, dass** der Einsatzkopf (25) einen gerillten, kegelstumpfförmigen Abschnitt (29) aufweist, über dem ein zylindrischer Gewindeabschnitt (31) angeordnet ist.

15. Motorisierungsvorrichtung (1) für den Antrieb mindestens eines Scheibenwischerarms eines Kraftfahrzeugs, **dadurch gekennzeichnet, dass** sie ein Austrittsorgan (15; 151) nach einem der vorhergehenden Ansprüche aufweist.

16. Herstellungsverfahren eines Austrittsorgans (15; 151) nach einem der Ansprüche 1 bis 14, **dadurch gekennzeichnet, dass** es einen Schritt aufweist, bei dem ein Kunststoff auf einen inneren Abschnitt (26; 261) eines Metalleinsatzes (16; 161; 162; 163) überformt wird, um mindestens eine Abtriebswelle (17; 171) zu bilden.

17. Herstellungsverfahren nach einem der vorhergehenden Ansprüche, **dadurch gekennzeichnet, dass** es einen Schritt aufweist, bei dem ein Kunststoff auf die Abtriebswelle (17; 171) überformt wird, um ein Zahnrad (40) zu bilden.

18. Herstellungsverfahren eines Austrittsorgans (15; 151) nach Anspruch 17, **dadurch gekennzeichnet, dass** die Kunststoffe der Abtriebswelle (17; 171) und des Zahnrads (40) koinjiziert werden.

## Claims

1. Output element (15; 151) for a motorisation device (1) for driving at least one windscreen wiper arm of a motor vehicle, comprising an output shaft (17; 171) and a toothed wheel (40) integral to and coaxial with the output shaft (17; 171), the output shaft (17; 171) being made of plastic material and the output element (15; 151) comprising a metallic insert (16; 161; 162; 163), **characterized in that** the plastic material of the output shaft (17; 171) is moulded partially over the metallic insert (16; 161; 162; 163), revealing an insert head (25; 251) protruding from the end of the output shaft (17; 171) and intended to connect to a windscreen wiper element in order to drive this in rotation.

2. Output element (15; 151) according to the preceding claim, **characterized in that** the metallic insert (16; 161; 162; 163) comprises said insert head (25; 251) and an inner portion (26; 261) over which the plastic material of the output shaft (17; 171) is moulded.

3. Output element (15; 151) according to the preceding claim, **characterized in that** said inner portion (26; 261) has peripheral radial reliefs and hollows.

4. Output element (15; 151) according to the preceding claim, **characterized in that** the peripheral radial reliefs and hollows of the inner portion (26) are formed by axial splines (27).

5. Output element (15; 151) according to claim 3, **characterized in that** the peripheral radial reliefs and hollows of the inner portion (261) are formed by at least two radial bosses (34).

6. Output element (15; 151) according to any of claims 2 to 5, **characterized in that** the metallic insert (16; 161; 162; 163) is made of two separate parts joined together axially, a first part carrying the insert head (25; 251) and a second part carrying the inner portion (26; 261).

7. Output element (15; 151) according to any of the preceding claims, **characterized in that** the plastic material of the output shaft (17; 171) comprises a plastic matrix and reinforcing fibres.

8. Output element (15; 151) according to any of the preceding claims, **characterized in that** the toothed wheel (40) is made of plastic material and **in that** the plastic material of the toothed wheel (40) is different from the plastic material of the output shaft (17; 171).

9. Output element (15; 151) according to any of the preceding claims, **characterized in that** the toothed wheel (40) is made of plastic material and **in that** the plastic material of the toothed wheel (40) is moulded over the output shaft (17; 171).

10. Output element (15; 151) according to the preceding claim, **characterized in that** the output shaft (17; 171) has a radial base (18) over which the plastic material of the toothed wheel (40) is moulded.

11. Output element (15; 151) according to the preceding claim, **characterized in that** the radial base (18) comprises at least one axial hole (19) and/or peripheral radial reliefs and hollows.

12. Output element (15; 151) according to any of the preceding claims, **characterized in that** the output shaft (17; 171) is hollow and opens at the end opposite the end (33; 331) partially receiving the metallic insert (16; 161; 162; 163).

13. Output element (151) according to any of the preceding claims, **characterized in that** the insert head (251) has a cylindrical form with straight knurling.

14. Output element (15) according to any of claims 1 to 12, **characterized in that** the insert head (25) has a fluted frustoconical portion (29) on which a threaded cylindrical portion (31) is arranged.

15. Motorisation device (1) for driving at least one windscreen wiper arm of a motor vehicle, **characterized in that** it comprises an output element (15; 151) according to any of the preceding claims.

16. Method for production of an output element (15; 151) according to any of claims 1 to 14, **characterized in that** it comprises a step during which a plastic material is moulded over an inner portion (26; 261) of a metallic insert (16; 161; 162; 163) in order to form at least one output shaft (17; 171).

17. Production method according to the preceding claim, **characterized in that** it comprises a step during which a plastic material is moulded over the output shaft (17; 171) in order to form a toothed wheel (40).

18. Method for production of an output element (15; 151) according to claim 17, **characterized in that** the plastic materials of the output shaft (17; 171) and of the toothed wheel (40) are coinjected.
